# FASCICULE DE BREVET EUROPEEN

(11) **EP 4 428 039 B1**
(45) Date de publication et mention de la délivrance du brevet: **16.04.2025**
(21) Numéro de dépôt: 24159746.7
(22) Date de dépôt: 26.02.2024
(51) Int. Cl.: B64D 29/02, A62C 3/08, A62C 35/08, B64D 45/00, F02C 7/25, A62C 35/02, F02C 7/20

(54) **ENSEMBLE POUR UN AÉRONEF, LEDIT ENSEMBLE COMPORTANT UN MAT ET UN RÉSERVOIR CONTENANT UN FLUIDE EXTINCTEUR**
ANORDNUNG FÜR EIN FLUGZEUG, BESAGTE ANORDNUNG MIT EINER MATTE UND EINEM TANK MIT LÖSCHFLÜSSIGKEIT
ASSEMBLY FOR AN AIRCRAFT, SAID ASSEMBLY COMPRISING A MAST AND A TANK CONTAINING A FIRE-EXTINGUISHING FLUID

(30) Priorité: 09.03.2023 FR 2302163
(43) Date de publication de la demande: 11.09.2024
(73) Titulaire: Airbus Operations (S.A.S.), 31060 Toulouse Cedex 9 (FR)
(72) Inventeur: SOULIE, Adeline, 31060 TOULOUSE (FR); GELIOT, Jean, 31060 TOULOUSE (FR)
(74) Mandataire: Airbus-OPS SAS

(56) Documents cités:
- US-A1- 2010 230 122
- US-A1- 2019 054 332
- US-A1- 2020 324 154
- US-A1- 2021 101 694
- US-A1- 2022 250 758
- US-A1- 2022 274 684
- US-A1- 2023 000 697

## Description

### DOMAINE TECHNIQUE

La présente invention concerne un ensemble pour un aéronef, ledit ensemble comportant un mât et un réservoir contenant un fluide extincteur, ainsi qu'un aéronef comportant au moins un tel ensemble.

### ÉTAT DE LA TECHNIQUE ANTÉRIEURE

Un aéronef comporte classiquement au moins une nacelle à l'intérieur de laquelle est disposé un moteur, par exemple du type turboréacteur. La nacelle et le moteur sont fixés à la structure de l'aéronef par l'intermédiaire d'un mât fixé sous l'aile de l'aéronef.

Afin d'éviter l'endommagement de la structure de l'aéronef lorsque le moteur prend feu, l'aéronef est équipé d'un système anti-incendie qui comporte deux réservoirs.

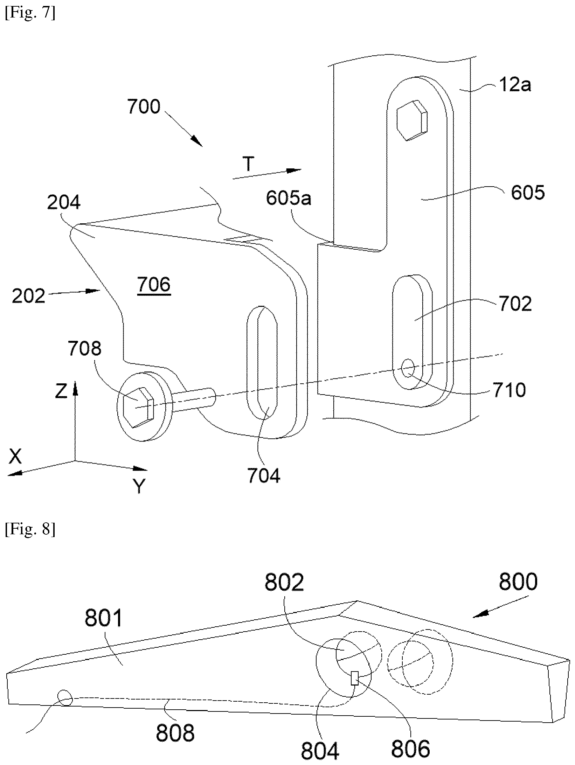

La Fig. 8 montre un ensemble 800 de l'état de la technique qui comporte un mât 801 et deux réservoirs 802 qui sont installés dans le mât 801 et qui contiennent chacun un fluide extincteur. Chaque réservoir 802 est sphérique et pour chaque réservoir 802, le mât 801 présente une fenêtre 804 qui traverse une paroi latérale du mât 801 et par laquelle le réservoir 802 est introduit et fixé à l'intérieur du mât 801.

Chaque réservoir 802 est équipé d'une tête de décharge 806 qui comporte un opercule qui ferme le réservoir 802 et une cartouche explosive qui détruit l'opercule lorsqu'elle est activée. Pour chaque réservoir 802, le système anti-incendie comporte également une canalisation de décharge 808 qui s'étend à l'intérieur du mât 801 entre la tête de décharge 806 et le moteur. La destruction de l'opercule permet de libérer le fluide extincteur qui s'écoule alors dans la canalisation de décharge 808 vers le moteur.

Pour des raisons environnementales, les produits extincteurs qui sont actuellement utilisés tels que le Halon, doivent être remplacés par de nouveaux produits extincteurs. Ces nouveaux produits extincteurs nécessitent un volume plus important pour remplir leur fonction et il est donc nécessaire d'agrandir chaque réservoir 802.

Chaque réservoir 802 devient alors plus lourd et l'espace à l'intérieur du mât 801 restant restreint, la manipulation et la mise en place du réservoir 802 deviennent ardues. Les documents US2021/101694, US2023/000697 et US2010/230122 décrivent des réservoirs selon l'art antérieur.

Il est donc nécessaire de trouver une installation différente qui facilite la mise en place et le retrait de chaque réservoir.

### EXPOSÉ DE L'INVENTION

Un objet de la présente invention est de proposer un ensemble pour un aéronef, où ledit ensemble comporte un mât et au moins un réservoir contenant un fluide extincteur, et pour le ou chaque réservoir un système qui assure une installation simple et rapide du réservoir dans le mât.

À cet effet, est proposé un ensemble pour un aéronef, ledit ensemble comportant :
- un mât s'étendant selon une direction longitudinale et comportant un châssis et deux parois latérales disposées de part et d'autre du châssis, chacune percée d'une fenêtre,
- au moins un réservoir comportant des moyens de fixation,
- un système d'accrochage arrangé pour suspendre le ou chaque réservoir à l'intérieur du mât en face des fenêtres,
- pour chaque réservoir, un chariot présentant un berceau destiné à recevoir le réservoir, le chariot étant monté à l'intérieur du châssis mobile en translation par rapport au châssis parallèlement à une direction de translation globalement parallèle à la direction longitudinale alternativement entre une position de mise en place où le chariot est disposé de manière à ce que le berceau soit en face des fenêtres et sous le réservoir et une position d'utilisation où le chariot est disposé de manière à ce que le berceau ne soit pas en face des fenêtres,
- pour chaque réservoir, des éléments de fixation qui assurent la fixation des moyens de fixation du réservoir sur le berceau, et
- pour chaque chariot, un système de verrouillage prenant alternativement une position de verrouillage dans laquelle le système de verrouillage bloque le chariot en position d'utilisation ou une position libre dans laquelle le système de verrouillage ne bloque pas le chariot.

Un tel ensemble permet un retrait et une mise en place simples et rapides du réservoir à l'intérieur du mât.

Avantageusement, le système d'accrochage comporte une barre horizontale et perpendiculaire à la direction de translation et solidaire du châssis et un crochet solidaire du réservoir et prenant la forme d'un L arrangé pour s'accrocher à la barre et ouvert du côté opposé à la position d'utilisation.

Avantageusement, l'ensemble comporte deux rails solidaires du châssis et le chariot est monté coulissant sur lesdits rails par l'intermédiaire d'une liaison glissière.

Avantageusement, le chariot comporte deux rails intermédiaires, où chacun est monté coulissant sur un des rails grâce à une liaison glissière, et le berceau présente deux rails terminaux où chacun est monté coulissant sur un des rails intermédiaires grâce à une liaison glissière.

Avantageusement, le système de verrouillage comporte, de part et d'autre d'un plan médian, un plot de guidage solidaire du châssis et orienté vers la position de mise en place, un logement réalisé dans le berceau, où le logement s'emmanche sur le plot en position d'utilisation, et un élément de verrouillage qui solidarise le berceau au châssis en position d'utilisation.

Avantageusement, chaque plot de guidage prend la forme d'un élément de forme oblongue avec le grand axe orienté verticalement et chaque logement prend la forme d'un trou de forme oblongue.

Avantageusement, l'ensemble comporte deux réservoirs et pour l'un des réservoirs, la translation pour passer de la position de mise en place à la position d'utilisation s'effectue dans le sens inverse à la translation pour passer de la position de mise en place à la position d'utilisation de l'autre réservoir.

L'invention propose également un aéronef comportant un ensemble selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention,
[Fig. 2] est une vue de côté d'un ensemble selon l'invention dans une première position dudit ensemble,
[Fig. 3] est la même vue de côté que celle de la Fig. 2 dans une deuxième position dudit ensemble,
[Fig. 4] est une vue en perspective d'un détail de réalisation de l'invention,
[Fig. 5] est une représentation d'un système d'attache mis en œuvre dans l'ensemble selon l'invention,
[Fig. 6] est une vue en perspective d'un exemple d'un chariot mis en en œuvre dans l'ensemble selon l'invention,
[Fig. 7] est une vue en perspective d'un exemple d'un système de verrouillage du chariot de la Fig. 6, et
[Fig. 8] est une vue en perspective d'un ensemble de l'état de la technique.

### EXPOSÉ DÉTAILLE DE MODES DE RÉALISATION

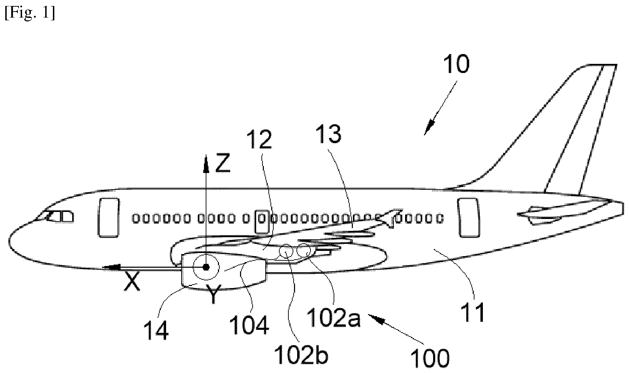

Dans la description qui suit, les termes relatifs à une position sont pris en référence à un aéronef en position normale de vol, c'est-à-dire comme il est représenté sur la Fig. 1.

Dans la description qui suit, et par convention, on appelle X la direction longitudinale du turboréacteur qui est parallèle à l'axe longitudinal de l'aéronef et orienté vers l'avant, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

La Fig. 1 montre un aéronef 10 qui comporte un fuselage 11 de chaque côté duquel est fixée une aile 13 qui porte un moteur 14 comme par exemple un turboréacteur double flux.

Pour chaque moteur 14, l'aéronef 10 comporte également un mât 12 qui assure la fixation du moteur 14 sous l'aile 13.

Pour chaque moteur 14, l'aéronef 10 comporte un système anti-incendie 100 qui comporte au moins un réservoir 102a-b rempli d'un fluide extincteur et, pour chaque réservoir 102a-b, une canalisation de décharge 104 qui s'étend entre ledit réservoir 102a-b et le moteur 14 soutenu par ledit mât 12. Dans le mode de réalisation de l'invention présenté ici, il y a deux réservoirs 102a-b, mais l'invention s'applique de la même manière pour un seul réservoir 102a-b. Dans la suite de la description, sauf précision particulière, il est fait référence à un seul réservoir 102a.

Comme pour l'état de la technique, le réservoir 102a est équipé d'une tête de décharge qui est arrangée pour libérer le fluide extincteur vers la canalisation de décharge 104 en cas de besoin.

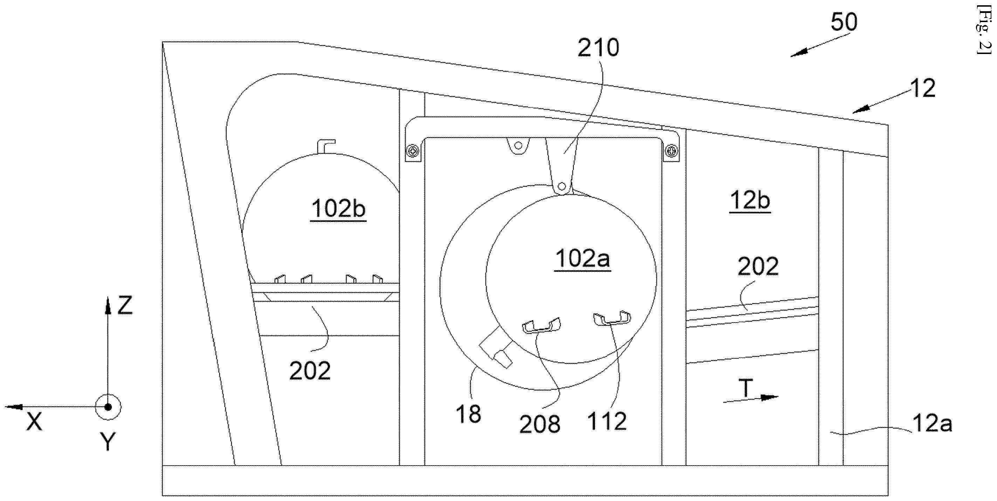

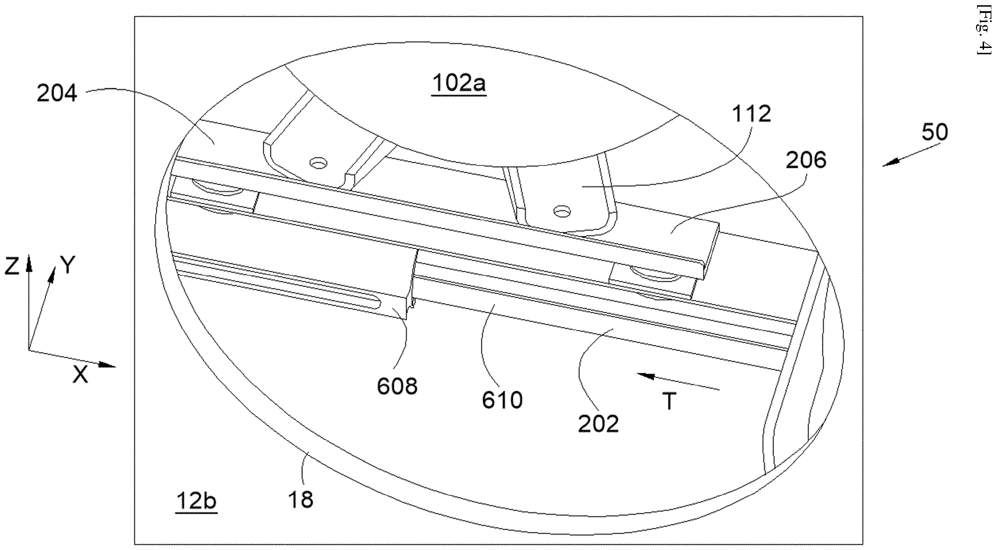

Les Figs. 2 à 4 montrent un ensemble 50 qui comporte le mât 12 et le réservoir 102a.

Le mât 12 s'étend classiquement selon la direction longitudinale X et comporte une structure constituée d'un châssis 12a et de parois fixées autour du châssis 12a.

Le châssis 12a est constitué par exemple de plusieurs profilés fixés les uns aux autres.

Parmi les parois, il y a au moins deux parois latérales 12b qui s'étendent de part et d'autre d'un plan médian vertical XZ du mât 12. Les deux parois latérales 12b sont ainsi fixées de part et d'autre du châssis 12a dans des plans globalement verticaux et parallèles au plan médian.

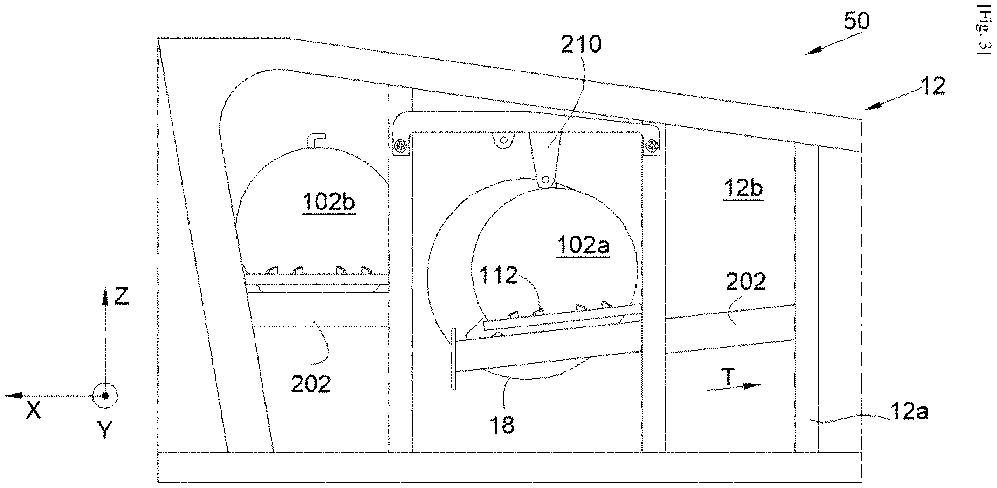

Chaque paroi latérale 12b est percée d'une fenêtre 18 (vue en arrière-plan sur les Figs. 2 et 3) qui permet d'accéder à l'intérieur du mât 12 et du châssis 12a depuis l'extérieur du mât 12 et la fenêtre 18 est dimensionnée pour autoriser le passage du réservoir 102a. Les deux fenêtres 18 sont disposées l'une en face de l'autre par rapport au plan médian XZ.

Le réservoir 102a est équipé des moyens de fixation 112 qui sont disposés de part et d'autre du plan médian XZ lorsque le réservoir 102a est en place. Comme expliqué ci-dessous, lorsque le réservoir 102a est placé dans le mât 12 à travers la fenêtre 18, des moyens de fixation 112 sont accessibles depuis chaque fenêtre 18. Les moyens de fixation 112 sont ici des pattes. Les moyens de fixation 112 coopèrent avec des éléments de fixation pour assurer la fixation du réservoir 102a à l'intérieur du mât 12 lorsque le réservoir 102a est en place. L'ensemble 50 comporte également un système d'accrochage 210 qui est arrangé pour suspendre le réservoir 102a à l'intérieur du mât 12 en face des fenêtres 18. La suspension est libérable, c'est-à-dire que le réservoir 102a peut être décroché facilement, voire automatiquement comme cela est décrit ci-dessous. Pour alléger l'ensemble 50, le système d'accrochage 210 peut être amovible, c'est-à-dire démontable et être retiré après l'installation du réservoir 102a-b.

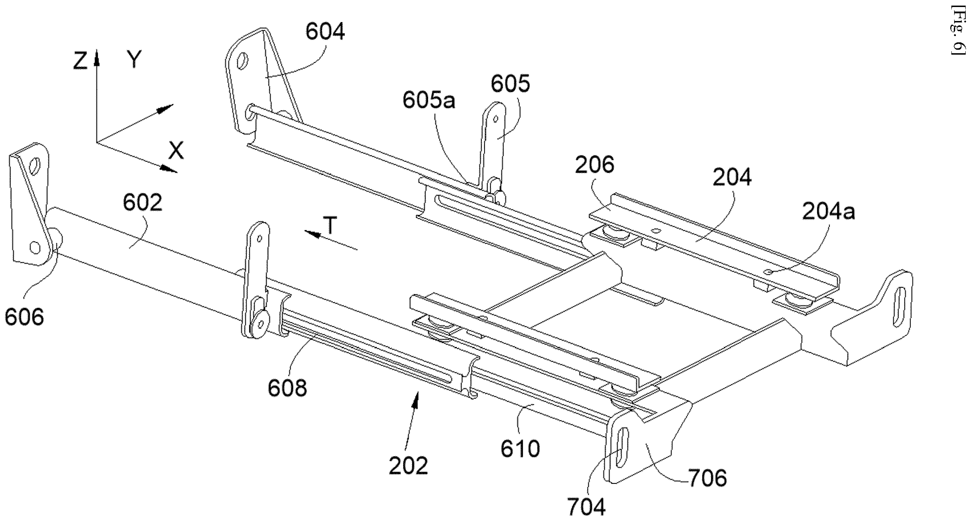

L'ensemble 50 comporte également un chariot 202 qui est monté à l'intérieur du châssis 12a et dont un mode de réalisation est représenté à la Fig. 6. Bien sûr, lorsqu'il y a plusieurs réservoirs 102a-b, il y a un chariot 202 par réservoir 102a-b.

Dans le mode de réalisation de l'invention présenté à la Fig. 6, le chariot 202 est monté mobile en translation parallèlement à une direction de translation T par rapport au châssis 12a. À cet effet, l'ensemble 50 comporte deux rails 602 qui sont solidaires du châssis 12a et le long desquels le chariot 202 coulisse grâce à une liaison glissière entre le chariot 202 et les rails 602. Les deux rails 602 s'étendent parallèlement à la direction de translation T.

Le chariot 202 présente un berceau 204 destiné à recevoir le réservoir 102a et le chariot 202 est mobile par rapport au châssis 12a alternativement entre une position de mise en place (Fig. 3) et une position d'utilisation (Fig. 2).

Dans la position de mise en place, le chariot 202 est disposé de manière à ce que le berceau 204 soit en face des fenêtres 18 et sous le réservoir 102a qui est suspendu au système d'accrochage 210 et dans la position d'utilisation, le chariot 202 est disposé de manière à ce que le berceau 204 ne soit pas en face des fenêtres 18.

Dans le mode de réalisation de l'invention présenté sur les Figs. 2 à 4 et 6, le chariot 202 se déplace en translation parallèlement à la direction de translation T qui est parallèle au plan médian XZ et globalement parallèlement à la direction longitudinale X. Dans le mode de réalisation de l'invention présenté aux Figs. 2 et 3, la direction de translation T est légèrement montante vers l'arrière du mât 12 par rapport à la direction longitudinale X. Selon le cas, le chariot 202 se déplace donc ici vers l'avant du mât 12 pour atteindre la position de mise en place ou l'arrière du mât 12 pour atteindre la position d'utilisation.

Les moyens de fixation 112 se fixent sur le berceau 204 à l'aide d'éléments de fixation comme des vis qui se vissent, à travers les pattes, dans le berceau 204 dans des alésages 204a prévus à cet effet.

La mise en place du réservoir 102a consiste ainsi :
- à placer le chariot 202 en position d'utilisation, c'est-à-dire en dehors des fenêtres 18 pour laisser la place libre entre les fenêtres 18,
- à introduire le réservoir 102a dans le châssis 12a à travers l'une des fenêtres 18,
- à suspendre le réservoir 102a dans le châssis 12a à l'aide du système d'accrochage 210,
- à déplacer le chariot 202 en position de mise en place, c'est-à-dire à placer le berceau 204 sous le réservoir 102a,
- à fixer les moyens de fixation 112 au berceau 204 depuis l'extérieur du mât 12 à travers les fenêtres 18 à l'aide des éléments de fixation, par exemple par la mise en place de vis, et
- à déplacer le chariot 202 en position d'utilisation en libérant le réservoir 102a du système d'accrochage 210.

L'ensemble 50 comporte également un système de verrouillage 700 dont un mode de réalisation est représenté à la Fig. 7 et qui prend alternativement une position de verrouillage ou une position libre. Dans la position de verrouillage, le système de verrouillage 700 bloque le chariot 202 en position d'utilisation et dans la position libre, le système de verrouillage 700 ne bloque pas le chariot 202 qui est alors libre de se déplacer de la position d'utilisation à la position de mise en place et inversement. Bien sûr, lorsqu'il y a plusieurs réservoirs 102a-b et donc plusieurs chariots 202, il y a un système de verrouillage 700 par chariot 202.

Avec un tel ensemble 50, la mise en place du réservoir est facilitée car le réservoir 102a est placé sur un chariot 202 mobile et il peut être escamoté vers l'arrière du mât 12. En outre, en décalant le réservoir 102a vers l'arrière en position d'utilisation, cela laisse la possibilité de mettre un autre réservoir 102b qui se décale alors à l'opposé vers l'avant en position d'utilisation.

Les Figs. 2 et 3 montrent ainsi un deuxième réservoir 102b qui est déjà mis en position d'utilisation et qui est disposé vers l'avant du mât 12. Le passage de la position d'utilisation à la position de mise en place est ainsi inversé par rapport au premier réservoir 102a. Les directions de translation de chaque réservoir 102a-b peuvent être légèrement différentes, mais elles restent globalement parallèles à la direction longitudinale X et donc globalement horizontales. Le terme globalement s'entend dans le sens où le réservoir 102a-b se déplace alternativement vers l'avant et l'arrière du mât 12. Ainsi, d'une manière générale, lorsque l'ensemble 50 comporte deux réservoirs 102a-b, pour l'un des réservoirs 102a-b, la translation pour passer de la position de mise en place à la position d'utilisation s'effectue dans le sens inverse à la translation pour passer de la position de mise en place à la position d'utilisation de l'autre réservoir 102b-a.

Le berceau 204 présente au moins une première face d'appui 206 orientée vers le haut et chaque moyen de fixation 112 présente une deuxième face d'appui 208 orientée vers le bas et lorsque le réservoir 102a est en place sur le berceau 204, chaque deuxième face d'appui 208 est en appui contre une première face d'appui 206.

Dans le mode de réalisation de l'invention, le berceau 204 présente deux premières faces d'appui 206 disposées de part et d'autre du plan médian XZ.

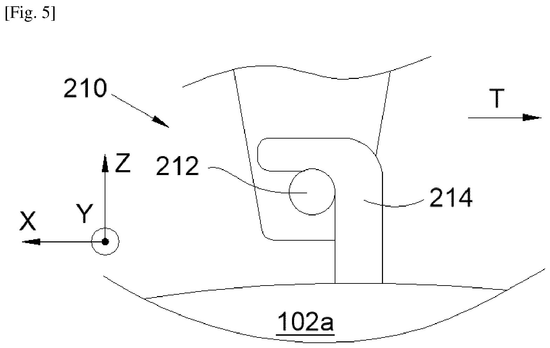

Le système d'accrochage 210, dont un mode de réalisation est représenté à la Fig. 5, comporte une barre 212 qui est horizontale et perpendiculaire à la direction de translation T, c'est-à-dire au plan médian XZ. La barre 212 est solidaire du châssis 12a.

Comme le montrent les Figs. 2 et 3, lorsqu'il y a plusieurs réservoirs 102a-b, le système d'accrochage 210 peut comporter une barre 212 par réservoir 102a-b en fonction de la position du berceau 204 en position de mise en place.

Le système d'accrochage 210 comporte également un crochet 214 qui est solidaire du réservoir 102a et qui prend ici la forme d'un L qui est arrangé pour s'accrocher à la barre 212. Le crochet 214 est ouvert du côté opposé à la position d'utilisation. Ainsi, lorsque le réservoir 102a est déplacé de la position de mise en place vers la position d'utilisation, il se sépare de la barre 212.

Avec un tel arrangement, le décrochage du réservoir 102a de la barre 212 est alors automatique lorsque le chariot 202 est déplacé vers la position d'utilisation.

La position de la barre 212 et la longueur du crochet 214 sont prévues pour que, lorsque les moyens de fixation 112 sont fixés sur le berceau 204 par les éléments de fixation, la pression exercée par le crochet 214 sur la barre 212 est suffisamment faible pour autoriser le déplacement du chariot 202 et le déplacement du crochet 214 par rapport à la barre 212.

Bien sûr, le système d'accrochage 210 peut prendre une autre forme. Par exemple, le système d'accrochage peut prendre la forme d'une barre similaire à celle décrite ci-dessus et d'une pince qui vient enserrer la barre et est libérable par ouverture de la pince par un technicien.

Dans le mode de réalisation de l'invention présenté à la Fig. 6, chaque rail 602 est fixé à chacune de ses extrémités au châssis 12a. Dans le mode de réalisation de l'invention présenté à la Fig. 6, une première extrémité est fixée par l'intermédiaire d'une première ferrure 604 du châssis 12a et une deuxième extrémité est fixée par l'intermédiaire d'une deuxième ferrure 605 du châssis 12a. Dans le mode de réalisation de l'invention présenté ici, la première extrémité est solidaire de la ferrure 604 associée, c'est-à-dire sur le châssis 12a, par l'intermédiaire d'un axe 606 et la deuxième extrémité est fixée à une patte 605a de la deuxième ferrure 605.

Dans le mode de réalisation de l'invention présenté à la Fig. 6, le chariot 202 prend la forme d'un système télescopique qui coulisse le long des rails 602. Le chariot 202 comporte ainsi deux rails intermédiaires 608, où chacun est monté coulissant sur un des rails 602 grâce à une liaison glissière, et le berceau 204 présente également deux rails terminaux 610 où chacun est monté coulissant sur un des rails intermédiaires 608 grâce à une liaison glissière.

Chaque liaison glissière n'est pas représentée en détail, mais elle peut prendre toute forme connue de l'homme du métier.

Pour assurer un bon positionnement du berceau 204 en position d'utilisation, le système de verrouillage 700 comporte des éléments de guidage et de fixation de part et d'autre du plan médian XZ.

La Fig. 7 montre les éléments de guidage et de fixation qui sont d'un des côtés du plan médian XZ, et les éléments de guidage et de fixation qui sont de l'autre côté sont symétriques. Le système de verrouillage 700 comporte ainsi, de part et d'autre du plan médian XZ, un plot de guidage 702 solidaire du châssis 12a et orienté vers la position de mise en place et un logement 704 réalisé dans le berceau 204, ici dans une palette 706 dudit berceau 204. Dans le mode de réalisation de l'invention présenté à la Fig. 7, le plot de guidage 702 est solidaire de la deuxième ferrure 605.

Lorsque le berceau 204 atteint la position d'utilisation, le logement 704 s'emmanche sur le plot 702 de manière à fixer la position du berceau 204 par rapport au châssis 12a.

Le logement 704 et le plot de guidage 702 sont dimensionnés de manière à ce que l'ajustement entre eux soit du type glissant ou glissant juste.

Le système de verrouillage 700 comporte ainsi, de part et d'autre du plan médian XZ, un élément de verrouillage 708 qui solidarise le berceau 204 au châssis 12a en position d'utilisation. Dans le mode de réalisation de l'invention présenté ici, l'élément de verrouillage 708 prend la forme d'une vis qui se visse, à travers le logement 704, dans un trou 710 réalisé dans le plot de guidage 702.

Dans le mode de réalisation de l'invention présenté à la Fig. 7, chaque plot de guidage 702 prend la forme d'un élément de forme oblongue avec le grand axe orienté verticalement et chaque logement 704 prend la forme d'un trou de forme oblongue correspondant. Les formes oblongues permettent un meilleur alignement du berceau 204 par rapport à une position d'utilisation optimale.

## Revendications

1. Ensemble (50) pour un aéronef (10), ledit ensemble (50) comportant :
- un mât (12) s'étendant selon une direction longitudinale (X) et comportant un châssis (12a) et deux parois latérales (12b) disposées de part et d'autre du châssis (12a), chacune percée d'une fenêtre (18),
- au moins un réservoir (102a-b) comportant des moyens de fixation (112),
- un système d'accrochage (210) arrangé pour suspendre le ou chaque réservoir (102a-b) à l'intérieur du mât (12) en face des fenêtres (18),
- **caractérisé en ce que** ledit ensemble comporte, pour chaque réservoir (102a-b), un chariot (202) présentant un berceau (204) destiné à recevoir le réservoir (102a-b), le chariot (202) étant monté à l'intérieur du châssis (12a) mobile en translation par rapport au châssis (12a) parallèlement à une direction de translation (T) globalement parallèle à la direction longitudinale (X) alternativement entre une position de mise en place où le chariot (202) est disposé de manière à ce que le berceau (204) soit en face des fenêtres (18) et sous le réservoir (102a-b) et une position d'utilisation où le chariot (202) est disposé de manière à ce que le berceau (204) ne soit pas en face des fenêtres (18),
- pour chaque réservoir (102a-b), des éléments de fixation qui assurent la fixation des moyens de fixation (112) du réservoir (102a-b) sur le berceau (204), et
- pour chaque chariot (202), un système de verrouillage (700) prenant alternativement une position de verrouillage dans laquelle le système de verrouillage (700) bloque le chariot (202) en position d'utilisation ou une position libre dans laquelle le système de verrouillage (700) ne bloque pas le chariot (202).

2. Ensemble (50) selon la revendication 1, **caractérisé en ce que** le système d'accrochage (210) comporte une barre (212) horizontale et perpendiculaire à la direction de translation (T) et solidaire du châssis (12a) et un crochet (214) solidaire du réservoir (102a) et prenant la forme d'un L arrangé pour s'accrocher à la barre (212) et ouvert du côté opposé à la position d'utilisation.

3. Ensemble (50) selon l'une des revendications 1 ou 2, **caractérisé en ce qu'**il comporte deux rails (602) solidaires du châssis (12a) et **en ce que** le chariot (202) est monté coulissant sur lesdits rails (602) par l'intermédiaire d'une liaison glissière.

4. Ensemble (50) selon la revendication 3, **caractérisé en ce que** le chariot (202) comporte deux rails intermédiaires (608), où chacun est monté coulissant sur un des rails (602) grâce à une liaison glissière, et **en ce que** le berceau (204) présente deux rails terminaux (610) où chacun est monté coulissant sur un des rails intermédiaires (608) grâce à une liaison glissière.

5. Ensemble (50) selon l'une des revendications 1 à 4, **caractérisé en ce que** le système de verrouillage (700) comporte, de part et d'autre d'un plan médian (XZ), un plot de guidage (702) solidaire du châssis (12a) et orienté vers la position de mise en place, un logement (704) réalisé dans le berceau (204), où le logement (704) s'emmanche sur le plot (702) en position d'utilisation, et un élément de verrouillage (708) qui solidarise le berceau (204) au châssis (12a) en position d'utilisation.

6. Ensemble (50) selon la revendication 5, **caractérisé en ce que** chaque plot de guidage (702) prend la forme d'un élément de forme oblongue avec le grand axe orienté verticalement et chaque logement (704) prend la forme d'un trou de forme oblongue.

7. Ensemble (50) selon l'une des revendications précédentes, **caractérisé en ce qu'**il comporte deux réservoirs (102a-b) et **en ce que** pour l'un des réservoirs (102a-b), la translation pour passer de la position de mise en place à la position d'utilisation s'effectue dans le sens inverse à la translation pour passer de la position de mise en place à la position d'utilisation de l'autre réservoir (102b-a).

8. Aéronef (10) comportant un ensemble (50) selon l'une des revendications précédentes.

## Patentansprüche

1. Baugruppe (50) für ein Luftfahrzeug (10), wobei die Baugruppe (50) Folgendes aufweist:
- einen Mast (12), der sich in einer Längsrichtung (X) erstreckt und einen Rahmen (12a) und zwei Seitenwände (12b) aufweist, die auf beiden Seiten des Rahmens (12a) angeordnet und jeweils von einem Fenster (18) durchbrochen sind,
- mindestens einen Behälter (102a-b), der Befestigungsmittel (112) aufweist,
- ein Aufhängungssystem (210), das dazu angeordnet ist, den oder jeden Behälter (102a-b) im Inneren des Masts (12) vor den Fenstern (18) aufzuhängen,
**dadurch gekennzeichnet, dass** die Baugruppe Folgendes aufweist,
für jeden Behälter (102a-b) einen Wagen (202), der eine Wiege (204) aufweist, die dazu bestimmt ist, den Behälter (102a-b) aufzunehmen, wobei der Wagen (202) im Inneren des Rahmens (12a) montiert ist, der in Bezug auf den Rahmen (12a) parallel zu einer Translationsrichtung (T), die zur Längsrichtung (X) im Allgemeinen parallel verläuft, zwischen einer Einsetzposition, in der der Wagen (202) so angeordnet ist, dass sich die Wiege (204) vor den Fenstern (18) und unter dem Behälter (102a-b) befindet, und einer Gebrauchsposition, in der der Wagen (202) so angeordnet ist, dass sich die Wiege (204) nicht vor den Fenstern (18) befindet, translatorisch hin- und herbewegbar ist,
- für jeden Behälter (102a-b) Befestigungselemente, die die Befestigung der Befestigungsmittel (112) des Behälters (102a-b) an der Wiege (204) sicherstellen, und
- für jeden Wagen (202) ein Verriegelungssystem (700), das abwechselnd eine Verriegelungsposition, in der das Verriegelungssystem (700) den Wagen (202) in der Gebrauchsposition blockiert, oder eine freie Position, in der das Verriegelungssystem (700) den Wagen (202) nicht blockiert, einnimmt.

2. Baugruppe (50) nach Anspruch 1, **dadurch gekennzeichnet, dass** das Aufhängungssystem (210) Folgendes aufweist: eine horizontale Stange (212), die senkrecht zur Translationsrichtung (T) verläuft und fest mit dem Rahmen (12a) verbunden ist, und einen Haken (214), der fest mit dem Behälter (102a) verbunden ist, die Form eines L aufweist, dazu angeordnet ist, sich an der Stange (212) einzuhaken, und auf der der Gebrauchsposition gegenüberliegenden Seite offen ist.

3. Baugruppe (50) nach einem der Ansprüche 1 oder 2, **dadurch gekennzeichnet, dass** sie zwei fest mit dem Rahmen (12a) verbundene Schienen (602) aufweist und dass der Wagen (202) über eine Gleitverbindung auf den Schienen (602) gleitend montiert ist.

4. Baugruppe (50) nach Anspruch 3, **dadurch gekennzeichnet, dass** der Wagen (202) zwei Zwischenschienen (608) aufweist, wovon jede dank einer Gleitverbindung auf einer der Schienen (602) gleitend montiert ist, und dass die Wiege (204) zwei Endschienen (610) aufweist, wovon jede dank einer Gleitverbindung auf einer der Zwischenschienen (608) gleitend montiert ist.

5. Baugruppe (50) nach einem der Ansprüche 1 bis 4, **dadurch gekennzeichnet, dass** das Verriegelungssystem (700) Folgendes aufweist: einen Führungsklotz (702) auf beiden Seiten einer Mittelebene (XZ), der fest mit dem Rahmen (12a) verbunden und in Richtung der Einsetzposition ausgerichtet ist, eine Aufnahme (704), die in der Wiege (204) ausgebildet ist, wobei die Aufnahme (704) in der Gebrauchsposition auf den Klotz (702) aufgesteckt ist, und ein Verriegelungselement (708), das in der Gebrauchsposition die Wiege (204) mit dem Rahmen (12a) verbindet.

6. Baugruppe (50) nach Anspruch 5, **dadurch gekennzeichnet, dass** jeder Führungsklotz (702) die Form eines länglichen Elements aufweist, dessen Hauptachse vertikal ausgerichtet ist, und wobei jede Aufnahme (704) die Form eines länglichen Lochs aufweist.

7. Baugruppe (50) nach einem der vorangehenden Ansprüche, **dadurch gekennzeichnet, dass** sie zwei Behälter (102a-b) aufweist und dass bei jedem der Behälter (102a-b) die Translation aus der Einsetzposition in die Gebrauchsposition in Gegenrichtung zur Translation aus der Einsetzposition in die Gebrauchsposition des anderen Behälters (102b-a) erfolgt.

8. Luftfahrzeug (10) mit einer Baugruppe (50) nach einem der vorangehenden Ansprüche.

## Claims

1. Assembly (50) for an aircraft (10), said assembly (50) comprising:
- a pylon (12) extending in a longitudinal direction (X) and comprising a frame (12a) and two lateral walls (12b) arranged on either side of the frame (12a), each pierced with an aperture (18),
- at least one reservoir (102a-b) comprising fastening means (112),
- a hooking system (210) arranged to suspend the or each reservoir (102a-b) inside the pylon (12) facing the apertures (18),
**characterized in that** said assembly comprises:
- for each reservoir (102a-b), a carriage (202) having a cradle (204) intended to receive the reservoir (102a-b), the carriage (202) being mounted inside the frame (12a) so as to be movable in translation with respect to the frame (12a) parallel to a translation direction (T) generally parallel to the longitudinal direction (X) alternately between an installation position, in which the carriage (202) is arranged in such a way that the cradle (204) is facing the apertures (18) and is under the reservoir (102a-b), and a use position, in which the carriage (202) is arranged in such a way that the cradle (204) is not facing the apertures (18),
- for each reservoir (102a-b), fastening elements which fasten the fastening means (112) of the reservoir (102a-b) to the cradle (204), and
- for each carriage (202), a locking system (700) alternately adopting a locking position, in which the locking system (700) immobilizes the carriage (202) in the use position, or a free position, in which the locking system (700) does not immobilize the carriage (202).

2. Assembly (50) according to Claim 1, **characterized in that** the hooking system (210) comprises a horizontal bar (212) perpendicular to the translation direction (T) and secured to the frame (12a), and a hook (214) secured to the reservoir (102a) and taking the form of an L which is arranged to hook on the bar (212) and is open on the side opposite to the use position.

3. Assembly (50) according to either of Claims 1 and 2, **characterized in that** it comprises two rails (602) secured to the frame (12a), and **in that** the carriage (202) is mounted so as to slide on said rails (602) by way of a slide connection.

4. Assembly (50) according to Claim 3, **characterized in that** the carriage (202) comprises two intermediate rails (608), where each is mounted so as to slide on one of the rails (602) by means of a slide connection, and **in that** the cradle (204) has two end rails (610), where each is mounted so as to slide on one of the intermediate rails (608) by means of a slide connection.

5. Assembly (50) according to one of Claims 1 to 4, **characterized in that** the locking system (700) comprises, on either side of a median plane (XZ), a guide block (702) secured to the frame (12a) and oriented towards the installation position, a receptacle (704) produced in the cradle (204), where the receptacle (704) fits onto the block (702) in the use position, and a locking element (708) which secures the cradle (204) to the frame (12a) in the use position.

6. Assembly (50) according to Claim 5, **characterized in that** each guide block (702) takes the form of an element of oblong shape with the major axis oriented vertically, and each receptacle (704) takes the form of a hole of oblong shape.

7. Assembly (50) according to one of the preceding claims, **characterized in that** it comprises two reservoirs (102a-b), and **in that**, for one of the reservoirs (102a-b), the translational movement for passing from the installation position to the use position is carried out in the opposite direction to the translational movement for passing from the installation position to the use position of the other reservoir (102b-a).

8. Aircraft (10) comprising an assembly (50) according to one of the preceding claims.
